# EUROPÄISCHE PATENTSCHRIFT

(11) **EP 2 362 243 B1**
(45) Veröffentlichungstag und Bekanntmachung des Hinweises auf die Patenterteilung: **09.05.2012**
(21) Anmeldenummer: 10154692.7
(22) Anmeldetag: 25.02.2010
(51) Int. Cl.: G01V 8/20

(54) **Optoelektronischer Sensor**
Optoelectronic sensor
Capteur optoélectronique

(43) Veröffentlichungstag der Anmeldung: 31.08.2011
(73) Patentinhaber: SICK AG, 79183 Waldkirch (DE)
(72) Erfinder: Klingelhöfer, Christian, 79110, Freiburg (DE)
(74) Vertreter: Hehl, Ulrich

(56) Entgegenhaltungen:
- EP-A2- 1 233 283
- DE-A1- 19 914 114
- US-A- 5 461 227
- US-B1- 7 508 512

## Beschreibung

Die Erfindung betrifft einen optoelektronischen Sensor nach dem Oberbegriff von Anspruch 1 sowie ein Verfahren zur Herstellung und Montage eines derartigen Sensors nach dem Oberbegriff von Anspruch 11.

Lichtschranken arbeiten nach dem Prinzip, einen Lichtstrahl auszusenden, in einem Lichtempfänger zu registrieren und zu bewerten, ob das Empfangssignal eine Schaltschwelle überschreitet oder nicht. Bekannt sind Lichtschranken, die als Einweglichtschranken einen Sender und einen gegenüberliegenden Empfänger aufweisen, zwischen denen der Überwachungsbereich aufgespannt ist, oder die als Reflexionslichtschranken den Sender und Empfänger auf einen Reflektor ausrichten, so dass ein doppelter Lichtweg entsteht. Bei einem Lichtgitter werden effektiv mehrere dieser einstrahligen Sensoren parallel zueinander zusammengefügt, wobei dann natürlich Teile der Schaltelektronik von mehreren Strahlen gemeinsam genutzt werden können.

Ein wichtiges Anwendungsgebiet derartiger optoelektronischer Sensoren ist die Sicherheitstechnik. Dabei wird der Zugang zu einer Gefahrenquelle, beispielsweise eine gefährliche Maschine, von dem Sensor überwacht, der bei unzulässigem Eingriff in das von den Strahlen aufgespannte Schutzfeld einen Abschaltbefehl erzeugt oder die Gefahr auf andere Weise abwendet, etwa durch Verbringen in eine sichere Parkposition. Da von der Funktionsfähigkeit des Sensors Gesundheit und Leben von Personen abhängt, sind die Anforderungen für in der Sicherheitstechnik eingesetzte Sensoren sehr streng und normiert, beispielsweise in der EN13849 für Maschinensicherheit oder der Gerätenorm EN61496 für berührungslos wirkende Schutzeinrichtungen.

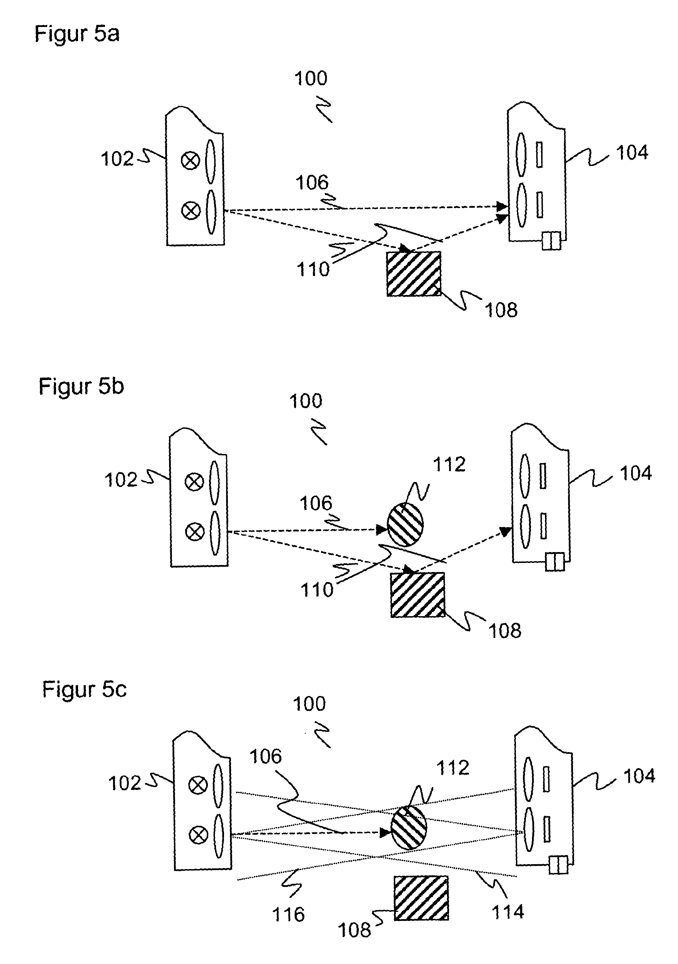

Wegen dieser Sicherheitsanforderungen müssen Fehlschaltungen des Sensors vermieden werden. Eine bekannte Ursache von Fehlschaltungen ist die sogenannte Umspiegelung, die anhand der Figur 5 am Beispiel eines nur ausschnittweise dargestellten Lichtgitters 100 mit einer Senderleiste 102 und einer Empfängerleiste 104 erläutert wird. Im ungestörten Betrieb wird jeweils der direkte Lichtstrahl 106 in der Empfängerleiste 104 registriert. Ein spiegelndes Objekt 108 eröffnet in Figur 5a einen zusätzlichen, indirekten Lichtweg für einen Umspiegelungslichtstrahl 110. Wird jetzt das Schutzfeld verletzt, indem wie in Figur 5b dargestellt ein Objekt 112 den direkten Sendelichtstrahl 106 unterbricht, so wird dies in der Empfängerleiste 104 nicht erkannt, weil dort weiterhin der Umspiegelungslichtstrahl 110 detektiert wird.

Um Umspiegelungen zu verhindern, wird herkömmlich der Abstrahlwinkel der Lichtsender und der Empfangswinkel der Lichtempfänger auf einen Akzeptanzwinkel begrenzt, und zwar je nach Normanforderungen auf bis zu nur ±2,5°. Figur 5c erläutert die Umspiegelungssituation mit diesen Akzeptanzwinkeln. Das spiegelnde Objekt 108 liegt außerhalb eines durch den Akzeptanzwinkel definierten Lichtsendekegels 114 und wird gar nicht erst beleuchtet. Zugleich würde gespiegeltes Licht von dem Objekt 108 nicht detektiert, da es von außerhalb eines ebenfalls durch den Akzeptanzwinkel definierten Empfangslichtkegels 116 einstrahlt. Der indirekte Lichtweg 110 kann deshalb nicht entstehen, und die Unterbrechung des direkten Lichtwegs 106 wird von dem Sensor 100 erkannt. Umspiegelungen sind nur noch in dem sehr kleinen Raumgebiet denkbar, in denen sich Sendelichtkegel 114 und Empfangslichtkegel 116 schneiden. Die Normen fordern als zusätzliche organisatorische Maßnahme, dass sich nahe an dem Schutzfeld und damit insbesondere innerhalb dieses kleinen Raumgebiets keine spiegelnden Flächen befinden dürfen.

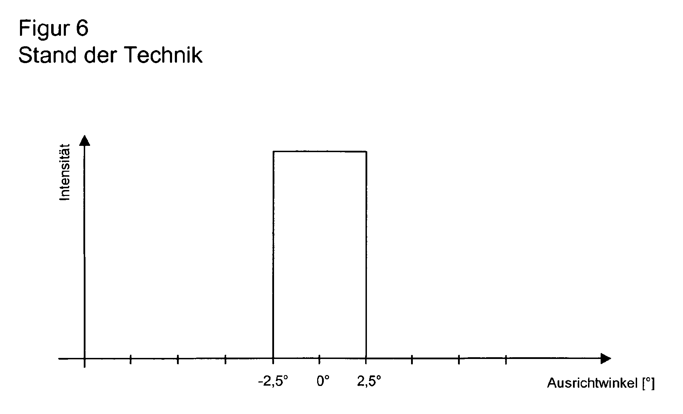

Durch die Winkelbegrenzung des Sendelichts und des Empfangslichts müssen Lichtsender und der Lichtempfänger sehr genau und damit aufwändig ausgerichtet werden. Um geringe Akzeptanzwinkel über den großen Dynamikbereich des Lichtsignals, der durch die quadratische Abhängigkeit zwischen Lichtintensität und Abstand zwischen Lichtsender und Lichtempfänger entsteht, zuverlässig einhalten zu können, werden Optiken mit sehr scharf und genau definierten Blenden verwendet. Dies führt zu einem in Figur 6 gezeigten sehr schmalen und steilen Intensitätsverlauf in Abhängigkeit von dem Ausrichtwinkel, in dem Lichtsender und Lichtempfänger zueinander stehen. Das Lichtsignal bei Ausrichtwinkeln jenseits des Akzeptanzwinkels ist Null, hat an den Grenzwinkel von ±2,5° sehr steile, nahezu senkrechte Flanken und ist innerhalb des Akzeptanzwinkelbereichs häufig um Faktoren in der Größenordnung von 1000-fach gesättigt.

Diese Charakteristik des Intensitätsverlaufs führt aber dazu, dass nicht nur sehr genau ausgerichtet werden muss. Zugleich ist eine elektronische Justierhilfe, die während des Ausrichtvorgangs das momentane Empfangssignal anzeigt, praktisch unbrauchbar, da eine solche Anzeige meist auf Null steht und bei Eintritt in den Akzeptanzwinkel unvermittelt in den Vollausschlag geht, ohne dabei einen Hinweis darauf zu geben, inwieweit der gewünschte Ausrichtwinkel mittig getroffen ist.

Aus der US 5,393,973 ist ein Verfahren zur Überprüfung der Einhaltung des Akzeptanzwinkels bekannt. Dabei werden Lichtstrahlen absichtlich zueinander schielend angeordnet. Die Empfangsintensitäten sind um einen entsprechenden Fehlwinkel gegeneinander versetzt. Trägt man dann über dem Ausrichtwinkel die jeweils größere Empfangsintensität im Verhältnis zu jeweils kleineren Empfangsintensität auf, so ergibt sich ein Maximum. Solange dieses Verhältnis über einer Schwelle bleibt, ist die Ausrichtung akzeptabel. Dieses herkömmliche Verfahren ist auf die Schielwinkel angewiesen, die den Ausrichtvorgang erschweren statt zu vereinfachen, da zwei zueinander versetzt angeordnete Lichtstrahlen noch genauer justiert sein müssen, um gemeinsam einen geforderten Akzeptanzwinkel einzuhalten.

In der DE 20 2006 012 454 U1 werden Blenden für eine elektronische Justagehilfe eingesetzt, die dafür sorgen, dass um den zentralen Sendelichtkegel mit dem geforderten Akzeptanzwinkel ein Ring von schwächerem Licht entsteht, aus dem ein Hinweis für die Ausrichtung abgeleitet wird. Die Ausrichtung muss aber anschließend fortgesetzt werden, bis der zentrale Sendelichtkegel empfangen wird, und die Justagehilfe gibt nur sehr wenige und unzureichende Hilfestellungen.

In der DE 101 06 755 A1 ist eine Datenlichtschranke mit zwei Sensoreinheiten offenbart, wobei die zweite Sensoreinheit der ersten Sensoreinheit eine gemessene Empfangsintensität mitteilt. Die erste Sensoreinheit zeigt dies als Maß für die Güte der Ausrichtung an. Dieses Maß ist aber nur ein relatives Maß, das noch ganz wesentlich von der gemäß DE 101 06 755 A1 unbekannten Entfernung abhängt. Man kann also mit dem herkömmlichen System durch Verschwenken feststellen, in welche Richtung die Justierung verbessert und verschlechtert wird. Es muss aber dennoch so lange justiert werden, bis die gewünschte Ausrichtung erreicht ist, und es gibt keinen quantitativen Hinweis über die Fehlwinkel. Im übrigen sind bei einer Datenlichtschranke gar keine Anforderungen an Umspiegelungssicherheit zu erfüllen, da es letztlich egal ist, ob der optische Übertragungsweg direkt oder indirekt ist, und somit ist kein Akzeptanzwinkel vorgegeben.

Es ist weiterhin im Stand der Technik bekannt, statt einer einfachen Schaltschwelle mehrere Schwellen zu verwenden. Damit soll die Dynamik der Empfangsintensität im laufenden Betrieb bei freiem Strahlengang kompensiert werden, die etwa durch Umgebungslicht, Verschmutzung oder unterschiedliche optische Eigenschaften zu detektierender Objekte entsteht. In der DE 199 14 114 A1 beispielsweise werden neben der Schaltschwelle zwei weitere Schwellen oberhalb der Schaltschwelle definiert. Verlässt die Empfangsintensität bei ungestörtem Strahlengang das durch diese beiden Schwellen definierte Intervall, so werden alle Schwellen entsprechend nachgeführt. Damit wird aber weder die Ausrichtung vereinfacht noch die Umspiegelungssicherheit erhöht.

Es ist daher Aufgabe der Erfindung, die Ausrichtung eines gattungsgemäßen Sensors zu vereinfachen. Dabei soll der Sensor umspiegelungssicher bleiben.

Diese Aufgabe wird durch einen optoelektronischen Sensor gemäß Anspruch 1 sowie ein Verfahren zur Herstellung und Montage eines Sensors gemäß Anspruch 11 gelöst. Dabei geht die Erfindung von dem Grundgedanken aus, statt mit gesättigten Signalen solche Signale zu verwenden, deren Intensitätsverlauf eine detektierbare Abhängigkeit von dem Ausrichtwinkel zeigt. Dann wird aus einer gemessenen Empfangsintensität auf den momentanen Ausrichtwinkel geschlossen. Der Akzeptanzwinkel wird nun nicht durch Justage erzwungen, sondern elektronisch durch zwei Schwellen um die gemessene Empfangsintensität eingestellt. Fällt der momentane Ausrichtwinkel wegen sehr grober Fehlausrichtung noch nicht in einen Bereich, in dem ein Intensitätsband elektronisch einstellbar ist, so kann dem Benutzer eine Information gegeben werden, um wieviel die Ausrichtung noch von idealer Ausrichtung abweicht.

Die Erfindung hat den Vorteil, dass Licht über einen deutlich größeren Ausrichtwinkelbereich empfangen wird und dadurch der Sensor in entsprechend toleranten Ausrichtwinkeln montiert werden kann. Eine genauere Ausrichtung ist nicht erforderlich, denn die je nach Schutzklasse der Normen gewünschten Akzeptanzwinkel für Umspiegelungssicherheit werden durch elektronische Einstellung eingehalten. Die Sendeoptiken und/oder Empfangsoptiken sind wesentlich einfacher, da exakte Blenden zur Einstellung eines schmalen, steilen Intensitätsverlaufs wie in Figur 6 verzichtbar sind. Die Lichtleistung für die Lichtsender muss dabei nicht erhöht werden, da erfindungsgemäß zusätzlich ausgenutzte Lichtenergie in größeren Ausrichtwinkeln herkömmlich auch vorhanden ist, jedoch durch die Blenden abgedeckt wird. Im Gegenteil werden die Lichtsender bei Verwendung des Sensors in kleineren als den maximal möglichen Reichweiten mit kleineren Sendeströmen betrieben. Dadurch wird auch Infrarotstrahlung in die Umgebung und die Beeinflussung anderer Systeme verringert. Umgekehrt sind die Lichtempfänger nicht in Sättigung und so in der Lage, Störstrahlungen von außen zu erkennen.

Die erfindungsgemäß vorgesehene obere und untere Schwelle legen ein Intensitätsband um die gemessene Empfangsintensität fest. Dazu wird zunächst um den momentanen Ausrichtwinkel ein als Akzeptanzwinkelbereich bezeichnetes Winkelband gelegt, welches die vorgegebene Anforderung von beispielsweise ±2,5° erfüllt. Über den Intensitätsverlauf erfolgt dann eine Umrechnung zwischen Intensität und Ausrichtwinkel. Dabei ist dem Sensor der vollständige funktionale Zusammenhang von Ausrichtwinkel und Intensität über den praktisch relevanten Winkelbereich und mit der praktisch relevanten Auflösung bekannt. Der Intensitätsverlauf ist bevorzugt als Wertetabelle gespeichert, welche so viele Werte enthält, wie für die Anforderungen an den Akzeptanzwinkel erforderlich sind. Alternativ wird eine Rechenvorschrift gespeichert, welche die Funktion des Intensitätsverlaufs erzeugt. Dieser Rechenvorschrift kann beispielsweise auch der Sendestrom zugrunde gelegt werden, sofern der Zusammenhang zwischen Sendestrom und optischer Ausgangsleistung hinreichend verlässlich ist.

Die Auswertungseinheit ist bevorzugt dafür ausgebildet, eine Strahlunterbrechung an einer Intensität des Empfangssignals unterhalb der unteren Schwelle und eine Umspiegelung oder Fremdlicht an einer Intensität des Empfangssignals oberhalb der oberen Schwelle zu erkennen. Ein Lichtstrahl gilt als nicht unterbrochen, solange die Intensität des Empfangssignals innerhalb des Intensitätsbandes zwischen unterer und oberer Schwelle liegt. Ein Ausbruch aus dem Intensitätsband wird detektiert, wobei eine gewisse Mindestzeit gefordert werden kann, um zu detektierende Ereignisse von temporären Störungen durch Staub oder dergleichen zu unterscheiden. Die Empfangsintensität fällt bei einem Objekteingriff durch zumindest teilweise Abschattung des Lichtstrahls ab, was durch die untere Schwelle erkannt wird. Aber auch zuviel Licht bedeutet einen Fehler, da der eigentliche Lichtstrahl in seiner Empfangsintensität nicht grundlos zunimmt. Mögliche Ursachen sind Fremdlicht, das aber durch Codierung des Sendestrahls ausblendbar ist, und vor allem eine Umspiegelung, da deren Licht von dem zugeordneten Sender stammt und daher auch richtig codiert ist. Bei Überschreitung der oberen Schwelle ist noch kein Objekteingriff erfolgt, aber der Sensor meldet einen Fehler, damit die Umspiegelung oder sonstige Störquelle entfernt wird.

In dem Speicher ist bevorzugt für verschiedene Entfernungen zwischen dem Lichtsender und dem Lichtempfänger je ein Intensitätsverlauf abgelegt. Alternativ ist die Auswertungseinheit dafür ausgebildet, den Intensitätsverlauf für verschiedene Entfernungen umzurechnen. Dazu wird ein Intensitätsverlauf bei einer festen Entfernung vorgegeben und aufgrund des quadratischen Abstandsgesetzes transformiert. In einer Mischform wird die Entfernung in diskrete Klassen zwischen minimaler und maximaler Reichweite des Sensors unterteilt und zu jeder Entfernungsklasse ein Intensitätsverlauf gespeichert, der dann auf Basis des Abstandsgesetzes interpoliert wird.

Der Sensor weist bevorzugt eine Eingabeeinrichtung zur Konfiguration der Entfernung zwischen dem Lichtsender und dem Lichtempfänger auf. Da die Absolutwerte des Intensitätsverlaufes ausgewertet werden und dieser stark von der Entfernung abhängt, wird dem Sensor auf diese Weise die Entfernung parametriert. Alternativ ist die Auswertungseinheit dafür ausgebildet, die Entfernung zwischen dem Lichtsender und dem Lichtempfänger zu messen. Dies kann beispielsweise durch ein Lichtlaufzeitverfahren geschehen. In einem Lichtgitter besteht eine weitere, in der EP 1 544 643 A1 vorgestellte Möglichkeit darin, die Anzahl der von einem Lichtempfänger empfangbaren Lichtsender zu zählen, die mit dem Abstand zunimmt. Nochmals alternativ wird der Sensor für eine feste Entfernung spezifiziert und so aufgestellt.

Vorteilhafterweise ist der Akzeptanzwinkelbereich konfigurierbar. Herkömmlich muss für einen anderen Akzeptanzwinkel, beispielsweise einem Wechsel von ±2,5° auf ±5°, die Sende- und/oder Empfangsoptik ausgetauscht werden. Erfindungsgemäß genügt eine elektronische Einstellung, welche die Abhängigkeit des Akzeptanzwinkelbereichs von dem Abstand zwischen unterer Schwelle und oberer Schwelle ausnutzt.

Der Sensor weist bevorzugt eine Anzeige auf, welche eine Information darüber enthält, um wieviel der Ausrichtwinkel von einer idealen Ausrichtung abweicht. Die während der Justierung gemessene Empfangsintensität kann der Sensor mit Hilfe des Intensitätsverlaufs unmittelbar in einen Ausrichtwinkel umrechnen, der zugleich die Abweichung von der idealen Ausrichtung bei 0° ist, bei der das Intensitätsmaximum mittig auf dem Lichtempfänger liegt. Diesen Zahlenwert in Grad gibt der Sensor beispielsweise auf einer LCD-Anzeige, als Farbe oder Anzahl einer LED oder dergleichen aus. Durch das stetige Ansteigen und Abfallen des Intensitätsverlaufs kann somit eine kontinuierliche elektronische Ausrichtanzeige realisiert werden. Mit Hilfe dieser kontinuierlichen Anzeige findet der Monteur auch sehr schnell die Richtung, in welche die Ausrichtung sich weiter verbessert. Eine Ausrichtung ist aber nicht zwingend: Grobe Fehlausrichtungen, in denen trotz des erweiterten Winkelbereichs gar kein Signal empfangen wird, sind mit bloßem Auge erkennbar, und sobald ein Signal empfangen wird, können die beiden Schwellen ohne weitere Ausrichtung elektronisch festgelegt werden. Eine verbesserte Ausrichtung erhöht aber die Funktionsreserven.

Der Lichtsender und/oder der Lichtempfänger weist bevorzugt eine Sendeoptik beziehungsweise eine Empfangsoptik auf, die dafür sorgt, dass die Intensität des Empfangssignals gleichmäßig mit dem Ausrichtwinkel abfällt. Somit wird also ein gut auswertbarer Intensitätsverlauf erreicht. Der Intensitätsverlauf ist insbesondere für keine Ausrichtwinkel gesättigt, wobei eine Sättigung in einem kleinen Intervall um 0° herum denkbar und unschädlich ist. Der Intensitätsverlauf fällt um die optimale Ausrichtung bei einem Ausrichtwinkel von 0° in beide Richtungen, also mit dem Betrag des Ausrichtwinkels, monoton oder sogar streng monoton ab. Dabei werden auswertbare Intensitäten über größere Winkel erreicht als typische sicherheitstechnische Winkel. Der Intensitätsverlauf fällt also erst bei beispielsweise ±5° oder sogar erst bei ±7.5° oder mehr, bei ±10° oder mehr oder bei ±15° oder mehr auf einen kleinen, nicht mehr zuverlässig messbaren Wert ab.

Bevorzugt hängt der Intensitätsverlauf bis auf ein Vorzeichen eineindeutig von dem Ausrichtwinkel ab. Da kleine Winkelfehler keine praktische Auswirkung haben, muss keine strenge Monotonie gefordert werden, solange konstante Teilbereiche klein sind. Wegen der Axialsymmetrie zu dem idealen Ausrichtwinkel ist diese Eineindeutigkeit nur bis auf ein Vorzeichen gegeben. Der Intensitätsverlauf erlaubt den eindeutigen Rückschluss von einer gemessenen Intensität auf den Betrag des Ausrichtwinkels. Beispiele für einen Intensitätsverlauf, der diese Bedingungen erfüllt, sind eine Gausskurve, eine Parabel, ein Dreieck und ähnliche Funktionen. Am robustesten ist ein linearer Intensitätsverlauf, also eine Dreiecksform, wobei gegebenenfalls eine Art Delle in der Spitze vorzusehen ist, da ein Monteur versuchen wird, auf die Spitze auszurichten und dies bei einem echten Dreieck praktisch nicht gelingt. Alternativ ist auch denkbar, die Sendeoptik ganz wegzulassen und das natürliche Strahlprofil der Lichtquelle oder von deren internen Optiken zu verwenden. Dabei entsteht ebenfalls ein in etwa gaussischer und jedenfalls ein zu beiden Seiten monoton abfallender Intensitätsverlauf.

Die Auswertungseinheit ist bevorzugt dafür ausgebildet, die optische Ausgangsleistung des Lichtsenders zu prüfen. Dazu können zunächst die Sendeströme geprüft werden. Herkömmliche Lichtquellen erzeugen aber oft bei gegebenem Sendestrom nicht zuverlässig eine gewünschte optische Ausgangsleistung, sondern sie sind lediglich für eine Mindestausgangsleistung spezifiziert, die um das Doppelte oder mehr übertroffen werden kann. Daher ist nochmals bevorzugt ein Empfänger neben dem Lichtsender vorgesehen, um die tatsächliche Lichtleistung zu messen. In einem Lichtgitter, in dem Lichtsender und Lichtempfänger in einer Leiste gemischt sind, kann einer der ohnehin vorhandenen benachbarten Lichtempfänger diese Aufgabe mit einem optischen Bypass übernehmen. Eine weitere Möglichkeit besteht darin, dass der gegenüberliegende Empfänger der anderen Leiste die Lichtleistung misst und diese Information wie bei einer Datenlichtschranke optisch codiert an die erste Leiste zurückgibt. Werden Abweichungen der optischen Ausgangsleistung gegenüber der ursprünglichen Lichtleistung festgestellt, so führt dies zu einem Fehler. In einem Wartungsmodus, in dem sichergestellt ist, dass die Lichtstrahlen frei sind, kann die Lichtleistung dann auch nachgeregelt werden, um die ursprünglich gespeicherte Ausgangsleistung wiederherzustellen und damit beispielsweise eine schleichende Verschmutzung auszugleichen. Dabei muss die Ausrichtung erhalten bleiben, da der Sensor sonst nicht zwischen Ausrichtfehlern und Verlusten der optischen Ausgangsleistung unterscheiden kann.

Der Sensor ist bevorzugt als Lichtgitter mit einer Vielzahl von optoelektronischen Sensoren mit nur einem Lichtstrahl ausgebildet, wobei die einzelnen Lichtstrahlen parallel zueinander angeordnet sind. Die einzelnen Lichtstrahlen werden auch als Kanäle bezeichnet. Bei einem Lichtgitter müssen nicht notwendig sämtliche Komponenten vervielfacht werden, sondern beispielsweise Gehäuse, Anschlüsse und Auswertungseinheit können gemeinsam genutzt werden. Auch die Intensitätsverläufe sind, sofern der interne Versatz der Lichtstrahlen klein bleibt, untereinander gleich und müssen nicht unbedingt mehrfach gespeichert werden.

Nochmals bevorzugt ist ein Abschaltsignal über einen sicheren Ausgang des Lichtgitters ausgebbar, wenn eines der Empfangssignale die untere Schwelle unterschreitet oder die obere Schwelle überschreitet. Der Sensor ist dann ein sicheres Lichtgitter, welches als berührungslos wirkende Schutzeinrichtung in sicherheitstechnischen Anwendungen eingesetzt wird, die ein Schutzfeld zur Absicherung einer Gefahrenquelle aufspannt. Das Abschaltsignal setzt die Maschine, welche die Gefahrenquelle bildet, sicherheitsgerichtet still.

Die Auswertungseinheit ist bevorzugt dafür ausgebildet, aus einem Vergleich der Intensitäten mehrerer Lichtstrahlen eine Information über die Ausrichtung der Lichtsender gegenüber den Lichtempfängern zu gewinnen. Bei optimal ausgerichtetem Lichtgitter liegt das Maximum der Intensitätsverteilung aller Kanäle mittig auf dem Lichtempfänger. Durch Korrelation der einzelnen Kanäle berechnet die Auswertungseinheit eine Information, in welcher Achse die Ausrichtung nicht stimmt, also ob eine Leiste um ihre Hauptachse verdreht, nach vorne verkippt oder seitlich verkippt ist, und auch in welchem Ausmaß der Winkel nicht stimmt. Das Vorzeichen des Ausrichtwinkels lässt sich wegen der Axialsymmetrie der Intensitätsverteilung nur aus mehreren Messungen unter Annahmen an die Stetigkeit der Ausrichtbewegung angeben. Alternativ ist denkbar, gezielt asymmetrische Intensitätsverteilungen zu verwenden, beispielsweise durch eine asymmetrische Blende, und auf diese Weise auch das Vorzeichen zu bestimmen.

Nach einem ganz ähnlichen Verfahren wird im Betrieb nach Abschluss der Montage und damit bei fester Ausrichtung die Plausibilität der gemessenen Intensitäten geprüft. Die Ausrichtung und damit die einzelnen zu erwartenden Intensitäten in den Kanälen sind dann bekannt, und eine Korrelation kann signifikante Unterschiede feststellen, um die Verlässlichkeit der Einzelauswertungen zu verbessern.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Insbesondere werden bevorzugt die optischen Ausgangsleistungen der Lichtsender gemessen, und Sendeströme für die Lichtsender werden so eingestellt, dass sie einer gewünschten Ausgangsleistung entsprechen. Damit werden beispielsweise in der Endprüfung Toleranzen der Lichtsender ausgeglichen, deren Spezifizierung oft nicht garantiert, dass bei gleichem Sendestrom auch die gleiche optische Ausgangsleistung geliefert wird. Es ist für die Erfindung wichtig, dass die Ausgangsleistung bekannt ist, weil sonst die Zuordnung von Ausrichtwinkel zu Intensität bei gegebener Entfernung und entsprechend die Schwellensetzung für den Akzeptanzwinkelbereich nicht stimmt. Da schon herkömmlich in der Endfertigung die Austrittswinkel und die Mindestintensitäten überprüft werden, bedeutet es nur sehr geringen und völlig automatisierbaren Zusatzaufwand, die ohnehin vorhandenen Messergebnisse für die Intensität auch dafür zu nutzen, die Sendeströme einzustellen.

In einer bevorzugten Weiterbildung werden Abweichungen von der parallelen Ausrichtung der Lichtsender zueinander gemessen und gespeichert. Angestrebt ist, dass die optischen Achsen der Lichtsender völlig parallel zueinander sind. Die verbleibenden Toleranzen können durch Einlernen des tatsächlichen Intensitätsverlaufes in der Endfertigung abgespeichert und später im Betrieb kompensiert werden. Dabei geht man beispielsweise davon aus, dass der Intensitätsverlauf an sich in allen Kanälen identisch ist und speichert nur einen Versatz in dem Ausrichtwinkel. Alternativ werden alle Intensitätsverläufe eingelernt und bilden so auch unterschiedliche Strahlcharakteristika der Lichtsender ab.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Querschnittsdarstellung einer Lichtschranke;
- Fig. 2: eine schematische Querschnittsdarstellung eines Lichtgitters;
- Fig. 3: eine Darstellung des Intensitätsverlaufs in Abhängigkeit des Ausrichtwin- kels zur Erläuterung der erfindungsgemäßen Schwellenbestimmung;
- Fig. 4: eine Darstellung mehrerer Intensitätsverläufe in Abhängigkeit des Aus- richtwinkels in verschiedenen Kanälen eines Lichtgitters;
- Fig. 5a-c: Ausschnitte einer vereinfachten Querschnittsdarstellung eines Lichtgitters zur Erläuterung von Umspiegelung und Akzeptanzwinkel; und
- Fig. 6: eine Darstellung des Intensitätsverlaufs in Abhängigkeit des Ausrichtwin- kels nach dem Stand der Technik.

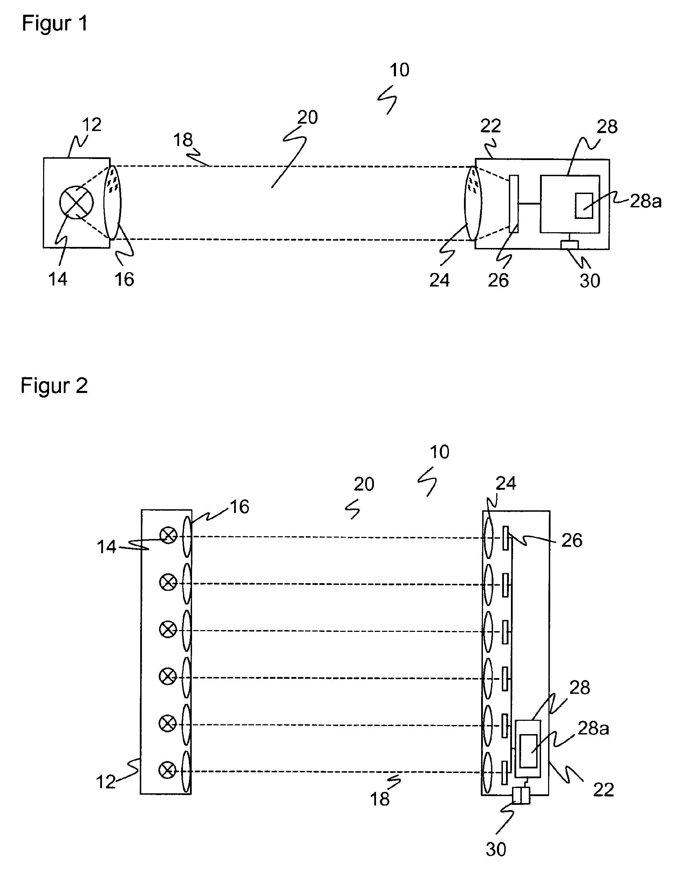

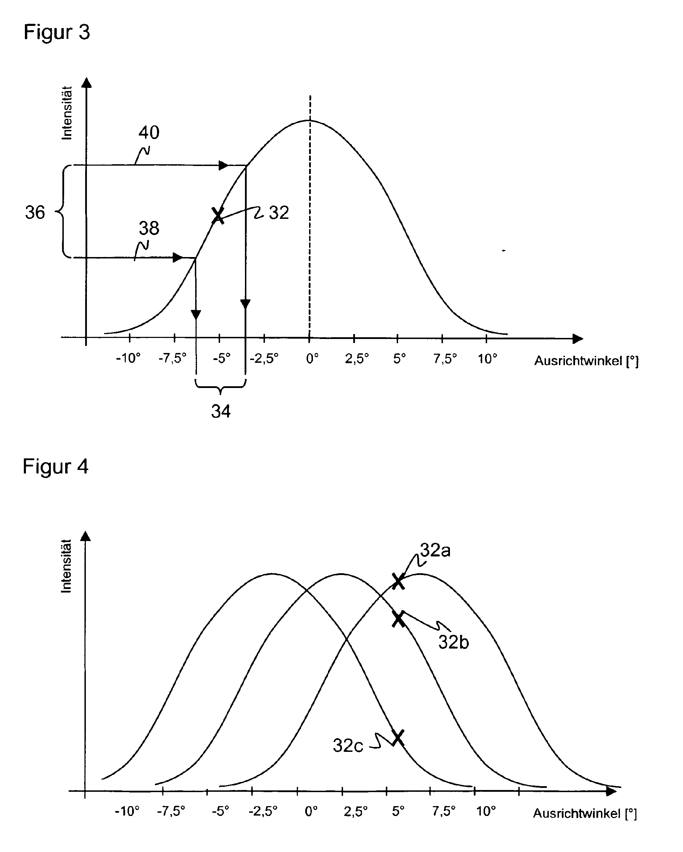

Anhand der Figuren 1 und 2 werden zunächst in einem Überblick die Elemente eines erfindungsgemäßen optoelektronischen Sensors 10 in zwei beispielhaften Ausführungsformen als Lichtschranke beziehungsweise Lichtgitter beschrieben. Anhand der Figuren 3 und 4 wird dann das Auswertungsverfahren und die Ausrichtung des Sensors 10 näher erläutert.

Figur 1 zeigt eine schematische Querschnittsdarstellung einer Lichtschranke 10. Ein Sendeteil 12 umfasst einen Lichtsender 14, beispielsweise eine LED oder einen Laser im infraroten oder einem anderen Spektrum. Das Licht des Lichtsenders 14 wird mit einer nachgeordneten Sendeoptik 16 kollimiert und als Lichtstrahl 18 durch einen Überwachungsbereich 20 zu einem Empfangsteil 22 gesandt. Der Lichtstrahl 18 trifft über eine Empfangsoptik 24 auf einen Lichtempfänger 26, der meist als Fotodiode ausgebildet ist, alternativ aber auch ein ortsauflösender CCD- oder CMOS-Bildsensor sein kann.

Die Sendeoptik 16 sowie die Empfangsoptik 24 können entgegen der Darstellung weitere Elemente wie zusätzliche Linsen, Blenden und dergleichen umfassen und sorgen dafür, dass der Lichtstrahl 18 ein gewünschtes Strahlprofil und folglich einen vorgegebenen Intensitätsverlauf in Abhängigkeit von einem Ausrichtwinkel aufweist, in dem Sendeteil 12 und Empfangsteil 22 zueinander ausgerichtet sind. In einer alternativen Ausführungsform wird der Intensitätsverlauf ohne spezielle Optik bereits durch die natürliche Abstrahlung oder den internen Aufbau des Lichtsenders 14 erreicht.

Eine Auswertungseinheit 28 ist mit dem Lichtempfänger 26 verbunden und erhält so ein elektrisches Empfangssignal, das der Intensität des Empfangslichts entspricht. Mit Hilfe von zwei Schwellen, die aus einem Intensitätsverlauf abgeleitet werden, der in einem Speicher 28a abgelegt ist, prüft die Auswertungseinheit 28, ob die Empfangsintensität des Lichtstrahls 18 innerhalb eines Intensitätsbandes bleibt. Ist das nicht der Fall, so ist der Lichtstrahl 18 unterbrochen beziehungsweise es liegt eine Umspiegelung oder Störung durch Fremdlicht vor. Ein entsprechendes Signal wird über einen Ausgang 30 des Sensors 10 ausgegeben.

Figur 2 zeigt als weitere Ausführungsform eines erfindungsgemäßen optoelektronischen eine schematische Querschnittsdarstellung eines Lichtgitters 10. Hier und im Folgenden werden gleiche Bezugszeichen für gleiche oder einander entsprechende Merkmale verwendet. Das Sendeteil 12 ist als Senderleiste mit einer Vielzahl in einer Reihe angeordneten Lichtsendern 14 ausgebildet, denen jeweils ein Lichtempfänger 26 in einem als Empfängerleiste ausgebildetes Empfangsteil zugeordnet ist. Abweichend von der Darstellung können Lichtsender 14 und Lichtempfänger 26 auch gemischt auf die beiden Leisten 12, 22 verteilt sein.

Für sicherheitstechnische Anwendungen ist das Lichtgitter 10 entsprechend der eingangs genannten Normen ausgebildet. Erkennt die Auswertungseinheit 28 einen Eingriff in das durch die Lichtstrahlen 18 aufgespannte Schutzfeld 20, weil mindestens ein Lichtstrahl 18 unterbrochen ist und deshalb die Empfangsintensität in dem zugehörigen Lichtempfänger 26 eine untere Schwelle unterschreitet, so wird ein sicherheitsgerichteter Abschaltbefehl über den sicheren Ausgang 30 (OSSD, Output Signal Switching Device) ausgegeben. Ein Abschaltbefehl erfolgt auch dann, wenn die Auswertungseinheit 28 einen Fehler erkennt. Ein besonderer Fehler ist das Vorliegen einer Umspiegelung, die an einem Überschreiten einer oberen Schwelle erkannt wird.

Figur 3 zeigt einen beispielhaften Intensitätsverlauf in Abhängigkeit von dem Ausrichtwinkel. Ideal zueinander ausgerichtet sind Sendeteil 12 und Empfangsteil 22, wenn das Intensitätsmaximum bei 0° mittig auf dem Lichtempfänger 26 liegt. Der gezeigte Intensitätsverlauf samt absoluter Amplitudenwerte gilt nur für eine bestimmte Entfernung zwischen Sendeteil 12 und Empfangsteil 22 und ist der Auswertungseinheit 28 bekannt. Dazu wird zunächst die Entfernung gemessen oder eingegeben. Die Auswertungseinheit 28 berechnet dann den Intensitätsverlauf für die tatsächliche Entfernung oder kann auf den Speicher 28a zugreifen, in dem der zu der Entfernung gehörige Intensitätsverlauf abgelegt ist.

Während der Montage des Sensor 10 werden Sendeteil 12 und Empfangsteil 22 nur grob nach Augenmaß zueinander ausgerichtet. Dann wird die Empfangsintensität 32 gemessen und mit Hilfe des Intensitätsverlaufs in einen Ausrichtwinkel umgerechnet. Um diesen Ausrichtwinkel legt die Auswertungseinheit 28 einen Akzeptanzwinkelbereich 34, der beispielsweise einem von der Norm geforderten höchstmöglichen Winkelbereich entspricht. Dem Akzeptanzwinkelbereich 34 wiederum ordnet die Auswertungseinheit 28 anhand des Intensitätsverlaufs ein Intensitätsband 36 mit einer unteren Schwelle 38 und einer oberen Schwelle 40 zu. Die Auswertungseinheit 28 hat aus einer einzelnen Messung keine Möglichkeit festzustellen, ob sie sich auf der steigenden oder fallenden Flanke des Intensitätsverlaufs befindet. Das macht aber keinen praktischen Unterschied, da auf der fallenden Flanke dieselben Schwellen 38, 40 festgelegt würden.

Der Intensitätsverlauf sollte wie einleitend beschrieben zu beiden Seiten monoton, nach Möglichkeit sogar linear abfallen, damit der Schwellenabstand unabhängig von der Ausrichtung wird. Flache Teilbereiche in dem Intensitätsverlauf führen zu nahe beieinander liegenden oder sogar zusammenfallenden Schwellen 38, 40 und sollten sich daher zumindest nur über Bruchteile des geforderten Akzeptanzwinkelbereichs 34 erstrecken.

Im Betrieb überwacht die Auswertungseinheit 28, ob das Empfangssignal zwischen der unteren Schwelle 38 und der oberen Schwelle 40 bleibt. Ein Absinken unter die untere Schwelle 38 wird als Unterbrechung des Lichtstrahls 18 und damit als Objektfeststellung gewertet. Ein Überschreiten der oberen Schwelle 40 wird als Umspiegelung interpretiert. Beides führt zu einem entsprechenden Signal an dem Ausgang 30, im Falle einer sicherheitstechnischen Anwendung auch zu einem sicherheitsgerichteten Abschaltbefehl.

Damit die Schwellen im Betrieb fehlersicher sind, muss regelmäßig getestet werden, ob der in der Auswertungseinheit 28 hinterlegte Intensitätsverlauf noch der tatsächlichen Empfangsintensität bei ungestörtem Lichtstrahl 18 entspricht. Dazu muss die optische Ausgangsleistung der Lichtsender 14 überwacht werden.

Es ist erfindungsgemäß nicht zwingend notwendig, die erste grobe Ausrichtung weiter zu verbessern, weil die elektronische Einstellung der Schwellen 38, 40 die Einhaltung des Akzeptanzwinkels sicherstellt. Für eine größere Funktionsreserve ist es aber dennoch vorteilhaft, dem Idealfall eines Ausrichtwinkels von 0° zumindest näher zu kommen. Dazu ist in einer weiteren Ausführungsform eine Anzeige des Sensors 10 vorgesehen, welche kontinuierlich den momentanen Ausrichtwinkel anzeigt, der aus der Empfangsintensität 32 abgeleitet wurde. Damit lässt sich die Ausrichtung rasch und zielgerichtet verbessern. Der Vorgang kann jederzeit abgebrochen werden, und die Auswertungseinheit 28 legt mit der erreichten Ausrichtung die beiden Schwellen 38, 40 wie oben beschrieben fest.

Figur 4 zeigt mehrere Intensitätsverläufe zu mehreren Kanälen eines Lichtgitters 10 in Abhängigkeit von dem Akzeptanzwinkel. Bei ideal ausgerichtetem Lichtgitter ohne Fehlertoleranzen in der internen Ausrichtung der Lichtsender 14 würden diese Intensitätsverläufe exakt übereinander liegen. Aus den gegenseitigen Verschiebungen, also den unterschiedlichen Intensitätswerten 32a-c bei einem beispielhaft angenommenen derzeitigen Ausrichtwinkel, kann die Auswertungseinheit 28 durch Vergleich eine Aussage zur Lage von Senderleiste 12 und Empfängerleiste 22 zueinander ableiten und angeben, in welcher Drehachse welche Ausrichtwinkel gegenüber idealer Ausrichtung vorliegt. Diese Angabe ist erneut wegen der symmetrischen Intensitätsverläufe vorzeichenlos, kann also auf Basis einer Messung keine Richtung angeben. Durch kontinuierliche Auswertung oder Anzeige lässt sich aber auch die Richtung bestimmen.

Ein gewisser Anteil am Versatz der Intensitätsverläufe in Figur 4 ist möglicherweise nicht auf die Ausrichtung, sondern auf Fertigungstoleranzen der zueinander parallelen Ausrichtung der Lichtstrahlen 18 zurückzuführen. Deshalb ist in einer Weiterführung der Erfindung vorgesehen, in der Endprüfung der Fertigung dem Lichtgitter 10 einzulernen, wie die Intensitätsverteilung bei jedem Lichtsender 14 und Lichtempfänger 26 zu einer gemeinsamen Achse liegt. Der so ermittelte Versatz eines jeden Lichtstrahls 18 kann dann im Betrieb kompensiert werden, damit aus der Korrelation der Messwerte der verschiedenen optischen Kanäle tatsächlich auf die Lage und Verdrehung des Lichtgitters 18 statt auf Fertigungstoleranzen geschlossen werden kann.

## Patentansprüche

1. Optoelektronischer Sensor (10), insbesondere Lichtschranke, mit einem Lichtsender (14) zum Aussenden eines Lichtstrahls (18) und einem dem Lichtsender (14) in einem Ausrichtwinkel gegenüberliegenden Lichtempfänger (26) zum Umwandeln des empfangenen Lichtstrahls (18) in ein elektrisches Empfangssignal, wobei die Sendeleistung des Lichtsenders (14) und/oder die Empfangsempfindlichkeit des Lichtempfängers (26) so eingestellt ist, dass das Empfangssignal einen mit dem Ausrichtwinkel variierenden Intensitätsverlauf aufweist, und wobei eine Auswertungseinheit (28) des Sensors (10) dafür ausgebildet ist, anhand des Empfangssignals festzustellen, ob der Lichtstrahl (18) unterbrochen ist oder nicht,
**dadurch gekennzeichnet,**
**dass** in einem Speicher (28a) des Sensors (10) der Intensitätsverlauf abgelegt ist und dass die Auswertungseinheit (28) dafür ausgebildet ist, anhand einer gemessenen Intensität des Empfangssignals aus dem Intensitätsverlauf eine untere Schwelle (38) und eine obere Schwelle (40) festzulegen, deren Abstand einem Akzeptanzwinkelbereich entspricht und den Lichtstrahl als nicht unterbrochen zu erkennen, solange die Intensität innerhalb eines Intensitätsbandes zwischen unterer Schwelle (38) und oberer Schwelle (40) liegt.

2. Sensor (10) nach Anspruch 1,
wobei die Auswertungseinheit (28) dafür ausgebildet ist, eine Strahlunterbrechung an einer Intensität des Empfangssignals unterhalb der unteren Schwelle (38) und eine Umspiegelung oder Fremdlicht an einer Intensität des Empfangssignals oberhalb der oberen Schwelle (40) zu erkennen.

3. Sensor nach (10) Anspruch 1 oder 2,
wobei in dem Speicher (28a) für verschiedene Entfernungen zwischen dem Lichtsender (14) und dem Lichtempfänger (26) je ein Intensitätsverlauf abgelegt ist, oder wobei die Auswertungseinheit (28) dafür ausgebildet ist, den Intensitätsverlauf für verschiedene Entfernungen umzurechnen.

4. Sensor (10) nach einem der vorhergehenden Ansprüche,
der eine Eingabeeinrichtung zur Konfiguration der Entfernung zwischen dem Lichtsender (14) und dem Lichtempfänger (26) aufweist, oder wobei die Auswertungseinheit (28) dafür ausgebildet ist, die Entfernung zwischen dem Lichtsender (14) und dem Lichtempfänger (26) zu messen.

5. Sensor (10) nach einem der vorhergehenden Ansprüche,
wobei der Akzeptanzwinkelbereich konfigurierbar ist.

6. Sensor (10) nach einem der vorhergehenden Ansprüche,
der eine Anzeige aufweist, welche eine Information darüber enthält, um wieviel der Ausrichtwinkel von einer idealen Ausrichtung abweicht.

7. Sensor (10) nach einem der vorhergehenden Ansprüche,
wobei der Lichtsender (14) eine Sendeoptik (16) und/oder der Lichtempfänger (26) eine Empfangsoptik (24) aufweist, die dafür sorgt, dass die Intensität des Empfangssignals gleichmäßig mit dem Ausrichtwinkel abfällt.

8. Sensor (10) nach einem der vorhergehenden Ansprüche,
wobei die Auswertungseinheit (28) dafür ausgebildet ist, die optische Ausgangsleistung des Lichtsenders (14) zu prüfen.

9. Lichtgitter mit einer Vielzahl von optoelektronischen Sensoren (10) nach einem der Ansprüche 1 bis 8, deren Lichtstrahlen (18) parallel zueinander angeordnet sind, wobei insbesondere ein Abschaltsignal über einen sicheren Ausgang (30) des Lichtgitters ausgebbar ist, wenn eines der Empfangssignale die untere Schwelle (38) unterschreitet oder die obere Schwelle (40) überschreitet.

10. Lichtgitter nach Anspruch 9,
wobei die Auswertungseinheit (28) dafür ausgebildet ist, aus einem Vergleich der Intensitäten mehrerer Lichtstrahlen (18) eine Information über die Ausrichtung der Lichtsender (14) gegenüber den Lichtempfängern (26) zu gewinnen oder, bei fester Ausrichtung, die Plausibilität der gemessenen Intensitäten zu prüfen.

11. Verfahren zur Herstellung und Montage eines optoelektronischen Sensors (10), insbesondere einer Lichtschranke oder eines Lichtgitters, wobei einem oder mehreren Lichtsendern (14) zum Aussenden jeweils eines Lichtstrahls (18) in einem Ausrichtwinkel ein oder mehrere Lichtempfänger (26) zum Umwandeln empfangener Lichtstrahlen (18) in ein elektrisches Empfangssignal gegenüberliegend angeordnet und die Lichtempfänger (26) mit einer Auswertungseinheit (28) zur Feststellung verbunden werden, ob ein Lichtstrahl (18) unterbrochen ist oder nicht, wobei die Sendeleistung der Lichtsender (14) und/oder die Empfangsempfindlichkeit der Lichtempfänger (26) so eingestellt wird, dass das Empfangssignal einen mit dem Ausrichtwinkel variierenden Intensitätsverlauf aufweist,
**dadurch gekennzeichnet,**
**dass** in einem Speicher (28a) des Sensors (10) der Intensitätsverlauf abgelegt wird und die Auswertungseinheit (28) anhand einer gemessenen Intensität des Empfangssignals aus dem Intensitätsverlauf eine untere Schwelle (38) und eine obere Schwelle (40) festlegt, deren Abstand einem Akzeptanzwinkelbereich entspricht, wobei die Auswertungseinheit (28) den Lichtstrahl als nicht unterbrochen erkennt, solange die Intensität innerhalb eines Intensitätsbandes zwischen unterer Schwelle (38) und oberer Schwelle (40) liegt.

12. Verfahren nach Anspruch 11,
wobei die Entfernung zwischen Lichtsendern (14) und Lichtempfängern (26) eingegeben oder gemessen und ein zu der Entfernung gehöriger Intensitätsverlauf berechnet oder aus dem Speicher (28a) gelesen und für den weiteren Betrieb verwendet wird

13. Verfahren nach Anspruch 11 oder 12,
wobei der Akzeptanzwinkelbereich konfiguriert wird.

14. Verfahren nach einem der Ansprüche 11 bis 13,
wobei die optischen Ausgangsleistungen der Lichtsender (14) gemessen und Sendeströme für die Lichtsender (14) so eingestellt werden, dass sie einer gewünschten Ausgangsleistung entsprechen.

15. Verfahren nach einem der Ansprüche 11 bis14,
wobei Abweichungen von der parallelen Ausrichtung der Lichtsender (14) zueinander gemessen und gespeichert werden.

## Claims

1. An optoelectronic sensor (10), in particular a light barrier, having a light transmitter (14) for the transmission of a light beam (18) and a light receiver (26) arranged facing the light transmitter (14) at an alignment angle to transform the received light beam (18) into an electrical received signal, wherein the transmission power of the light transmitter (14) and/or the reception sensitivity of the light receiver (26) is/are set such that the received signal has an intensity distribution varying in accordance with the alignment angle, and wherein an evaluation unit (28) of the sensor (10) is configured to determine by means of the received signal whether the light beam (18) is interrupted or not,
**characterized in that**
the intensity distribution is stored in a memory (28a) of the sensor (10) and **in that** the evaluation unit (28) is configured to determine a lower threshold (38) and an upper threshold (40), whose separation corresponds to an accepted angular range, from the intensity distribution based on a measured intensity of the received signal, and to detect the light beam as not interrupted as long as the intensity is within an intensity range between the lower threshold (38) and the upper threshold (40).

2. A sensor (10) in accordance with claim 1,
wherein the evaluation unit (28) is configured to detect a beam interruption from an intensity of the received signal below the lower threshold (38) and to detect bypass light or stray light from an intensity of the received signal above the upper threshold (40).

3. A sensor (10) in accordance with claim 1 or 2,
wherein respective intensity distributions are stored in the memory (28a) for different separation distances between the light transmitter (14) and the light receiver (26), or wherein the evaluation unit (28) is configured to adapt the intensity distribution for different separation distances by calculation.

4. A sensor (10) in accordance with any of the preceding claims,
which has an input device for configuration of the separation distance between the light transmitter (14) and the light receiver (26), or wherein the evaluation unit (28) is configured to measure the separation distance between the light transmitter (14) and the light receiver (26).

5. A sensor (10) in accordance with any of the preceding claims,
wherein the acceptance angle range is configurable.

6. A sensor (10) in accordance with any of the preceding claims,
which has a display which contains information on how much the alignment angle deviates from an ideal alignment.

7. A sensor (10) in accordance with any of the preceding claims,
wherein the light transmitter (14) has a transmission optics (16) and/or the light receiver (26) has a receiving optics (24) which ensures that the intensity of the received signal falls off uniformly in dependence on the alignment angle.

8. A sensor (10) in accordance with any of the preceding claims,
wherein the evaluation unit (28) is configured to check the optical output power of the light transmitter (14).

9. A light grid having a plurality of optoelectronic sensors (10) according to any of claims 1 to 8, wherein the light beams (18) of the sensors (10) are arranged parallel to one another, wherein in particular a shut off signal can be emitted via a secure output (30) of the light grid when one of the received signals falls below the lower threshold (38) or exceeds the upper threshold (40).

10. A light grid in accordance with claim 9 wherein the evaluation unit (28) is configured to obtain an information on the alignment of the light transmitters (14) with respect to the light receivers (26) from a comparison of the intensities of a plurality of light beams (18) or, for fixed alignment, to check the plausibility of the measured intensity.

11. A method for the manufacture and mounting of an optoelectronic sensor (10), in particular a light barrier or a light grid, wherein one or more light transmitters (14) for transmitting a respective light beam (18) are arranged facing one or more light receivers (26) at an alignment angle to transform received light beams (18) into an electronic received signal and the light receivers (26) are connected to an evaluation unit (28) for determining whether a light beam (18) is interrupted or not, wherein the transmission power of the light transmitters (14) and/or the receiving sensitivity of the light receivers (26) are set such that the received signal has an intensity distribution which varies according to the alignment angle,
**characterized in that**
the intensity distribution is stored in a memory (28a) of the sensor (10) and the evaluation unit (28) determines a lower threshold (38) and an upper threshold (40), whose separation corresponds to an accepted angular range, from the intensity distribution based on a measured intensity of the received signal, wherein the evaluation unit (28) detects the light beam as not interrupted as long as the intensity is within an intensity range between the lower threshold (38) and the upper threshold (40).

12. A method in accordance with claim 11,
wherein the distance between light transmitters (14) and light receivers (26) is input or measured and an intensity distribution associated with the separation distance is calculated or read out from the memory (28a) and used for the further operation.

13. A method in accordance with claim 11 or 12,
wherein the accepted angular range is configured.

14. A method in accordance with any of claims 11 to 13,
wherein the optical output powers of the light transmitters (14) are measured and transmission currents are set for the light transmitters (14), such that they correspond to a desired output power.

15. A method in accordance with any of claims 11 to 14,
wherein deviations from the parallel alignment of the light transmitters (14) amongst one another are measured and saved.

## Revendications

1. Capteur optoélectronique (10), en particulier barrière lumineuse, comprenant un émetteur de lumière (14) pour émettre un rayon lumineux (18) et un récepteur de lumière (26) à l'opposé de l'émetteur de lumière (14) dans un angle d'orientation, pour convertir le rayon lumineux (18) reçu en un signal de réception électrique, dans lequel la puissance d'émission de l'émetteur de lumière (14) et/ou la sensibilité de réception du récepteur de lumière (26) est ainsi réglée que le signal de réception présente une évolution d'intensité qui varie avec l'angle d'orientation, et dans lequel une unité d'évaluation (28) du capteur (10) est réalisée pour constater, au moyen du signal de réception, si le rayon lumineux (18) est interrompu ou non,
**caractérisé en ce que** l'évolution d'intensité est déposée dans une mémoire (28a) du capteur (10), et **en ce que** l'unité d'évaluation (28) est réalisée pour, au moyen d'une intensité mesurée du signal de réception à partir de l'évolution d'intensité, fixer un seuil inférieur (38) et un seuil supérieur (40) dont la distance correspond à une plage angulaire d'acceptation et reconnaître que le rayon lumineux n'est pas interrompu aussi longtemps que l'intensité tombe à l'intérieur d'une bande d'intensité entre le seuil inférieur (38) et le seuil supérieur (40).

2. Capteur (10) selon la revendication 1,
dans lequel l'unité d'évaluation (28) est réalisée pour reconnaître une interruption du rayon à une intensité du signal de réception au-dessous du seuil inférieur (38) et un miroitement ou une lumière externe à une intensité du signal de réception au-dessus du seuil supérieur (40).

3. Capteur (10) selon la revendication 1 ou 2,
dans lequel une évolution d'intensité respective pour divers éloignements entre l'émetteur de lumière (14) et le récepteur de lumière (26) est déposée dans la mémoire (28a), ou dans lequel l'unité d'évaluation (28) est réalisée pour recalculer l'évolution d'intensité pour divers éloignements.

4. Capteur (10) selon l'une des revendications précédentes,
qui comprend un dispositif d'entrée pour la configuration de l'éloignement entre l'émetteur de lumière (14) et le récepteur de lumière (26), ou dans lequel l'unité d'évaluation (28) est réalisée pour mesurer l'éloignement entre l'émetteur de lumière (14) et le récepteur de lumière (26).

5. Capteur (10) selon l'une des revendications précédentes,
dans lequel la plage angulaire d'acceptation peut être configurée.

6. Capteur (10) selon l'une des revendications précédentes,
qui comprend un affichage, lequel contient une information quant à l'amplitude de l'écart de l'angle d'orientation depuis une orientation idéale.

7. Capteur (10) selon l'une des revendications précédentes,
dans lequel l'émetteur de lumière (14) comprend une optique d'émission (16) et/ou le récepteur de lumière (28) comprend une optique de réception (24) qui a pour rôle de faire diminuer l'intensité du signal de réception régulièrement avec l'angle d'orientation.

8. Capteur (10) selon l'une des revendications précédentes,
dans lequel l'unité d'évaluation (28) est réalisée pour contrôler la puissance de sortie optique de l'émetteur de lumière (14).

9. Grille lumineuse comprenant une pluralité de capteurs optoélectroniques (10) selon l'une des revendications 1 à 8, dont les rayons lumineux (18) sont agencés parallèlement les uns aux autres, dans laquelle en particulier un signal de coupure peut être délivré via une sortie sécurisée (30) de la grille lumineuse, si l'un des signaux de réception passe au-dessous du seuil inférieur (38) ou au-dessus du seuil supérieur (40).

10. Grille lumineuse selon la revendication 9,
dans laquelle l'unité d'évaluation (28) est réalisée pour obtenir, à partir d'une comparaison des intensités de plusieurs rayons lumineux (18), une information sur l'orientation de l'émetteur de lumière (14) par rapport au récepteur de lumière (26) ou bien, dans le cas d'une orientation fixe, pour vérifier la plausibilité des intensités mesurées.

11. Procédé pour la fabrication et le montage d'un capteur optoélectronique (10), en particulier une barrière lumineuse ou une grille lumineuse, dans lequel un ou plusieurs récepteurs de lumière (26) pour convertir des rayons lumineux reçus (18) en un signal de réception électrique sont agencés à l'opposé d'un ou plusieurs émetteurs de lumière (14) destinés à émettre chacun un rayon lumineux (18) dans un angle d'orientation, et les récepteurs de lumière (26) sont connectés à une unité d'évaluation (28) pour constater si un rayon lumineux (18) est interrompu ou non, dans lequel la puissance d'émission des émetteurs de lumière (14) et/ou la sensibilité de réception des récepteurs de lumière (26) est ainsi réglée que le signal de réception présente une évolution d'intensité qui varie avec l'angle d'orientation,
**caractérisé en ce que**
l'évolution de l'intensité est déposée dans une mémoire (28a) du capteur (10) et l'unité d'évaluation (28) détermine, en s'aidant d'une intensité mesurée du signal de réception à partir de l'évolution d'intensité, un seuil inférieur (38) et un seuil supérieur (40) dont la distance correspond à une plage angulaire d'acceptation, dans lequel l'unité d'évaluation (28) reconnaît que le rayon lumineux n'est pas interrompu aussi longtemps que l'intensité tombe à l'intérieur d'une bande d'intensité entre le seuil inférieur (38) et le seuil supérieur.

12. Procédé selon la revendication 11,
dans lequel l'éloignement entre les émetteurs de lumière (14) et les récepteurs de lumière (26) est saisi ou mesuré, et une évolution d'intensité appartenant à l'éloignement est calculée ou lue à partir de la mémoire (28a) et est utilisée pour la suite du fonctionnement.

13. Procédé selon la revendication 11 ou 12,
dans lequel la plage angulaire d'acceptation est configurée.

14. Procédé selon l'une des revendications 11 à 13,
dans lequel les puissances de sortie optique de l'émetteur de lumière (14) sont mesurées et des courants d'émission pour les émetteurs de lumière (14) sont ainsi choisis qu'ils correspondent à une puissance de sortie désirée.

15. Procédé selon l'une des revendications 11 à 14,
dans lequel des écarts par rapport à l'orientation parallèle des émetteurs de lumière (14) l'un par rapport à l'autre sont mesurés et mémorisés.
